# EUROPEAN PATENT SPECIFICATION

(11) **EP 3 460 172 B1**
(45) Date of publication and mention of the grant of the patent: **30.12.2020**
(21) Application number: 18198978.1
(22) Date of filing: 16.06.2015
(51) Int. Cl.: E21B 19/14, E02D 27/32, E02D 27/02, E21B 19/15

(54) **PIPE RACKS**
ROHRGESTELLE
BÂTIS DE TUYAU

(30) Priority: 17.06.2014 US 201414306326; 17.04.2015 US 201514689589
(43) Date of publication of application: 27.03.2019
(62) Document number(s) of the earlier application(s) in accordance with Art. 76 EPC: 15810048.7 / 3 158 139
(73) Proprietor: Tindall Corporation, Spartanburg, SC 29304 (US)
(72) Inventor: ZAVITZ, Bryant, Conley, GA 30288 (US)
(74) Representative: D Young & Co LLP

(56) References cited:
- WO-A1-2009/157601
- JP-A- H11 181 796
- US-A- 2 574 711
- US-A- 2 783 029
- US-A- 3 074 209
- US-A- 3 436 892
- US-A1- 2014 033 628
- SEBASTIÁN F. VAQUERO ET AL: "Precast concrete, steel-braced, hybrid pipe rack structures", PCI JOURNAL, vol. 58, no. 4, 1 September 2013 (2013-09-01), pages 55-67, XP055549511, US ISSN: 0887-9672, DOI: 10.15554/pcij.09012013.55.67

## Description

### CROSS REFERENCE TO RELATED APPLICATIONS

This application claims priority to U.S. Patent Application No. 14/740,306, filed June 16, 2015, U.S. Patent Application No. 14/689,589, filed April17, 2015, and U.S. Patent Application No. 14/306,326, filed June 17, 2014, which issued as U.S. Patent No. 9,032,677 on May 19, 2015.

### FIELD OF THE INVENTION

The present subject matter relates generally to racks for supporting pipes, especially pipes at a refinery.

### BACKGROUND OF THE INVENTION

Oil refineries include many chemical processing units, each removing one or more hydrocarbons from a mixture of many. Extensive piping runs between all of these processing units and various holding tanks. This piping is generally supported off the ground by steel racks. Each section of rack including two legs and at least one horizontal support bar is generally called a bent.

A first problem that arises with the present pipe racks is that if one of the pipes leaks liquid or gas that catches fire, an intense fire can cause the steel bent to lose its structural integrity. This will then cause the rest of the pipes on that bent to lose support, possibly rupturing the other pipes as well. This can cause a single leak to turn into a catastrophic fire and/or explosion. Thus, racks impervious to fire would avoid this problem.

Further, the location and orientation of each bent is very important to ensure the correct support of the pipe, including the correct slope to the pipe (if any). Steel bents require that the foundation of each leg be determined very accurately to ensure accurate placement of the bent. This is very time consuming, leading to greater cost and delay when building the refinery. Accordingly, a pipe rack that can be placed without such additional labor is desired.

WO 2009/157601 A1 describes a pipe rack constructed with precast concrete members. The pipe rack includes at least four columns fabricated of precast concrete, arranged in transverse and longitudinal directions, and vertically installed on a footing, a plurality of transverse beams horizontally installed between the two transverse columns, fabricated of precast concrete members to which pre-tension is applied, having a hollow zone therein, connected between the columns under post-tension, in a fixed structure, and having a variety of pipes installed thereon, and a plurality of longitudinal beams horizontally installed between the two longitudinal columns arranged in the longitudinal direction, fabricated of precast concrete members to which pre-tension is applied, having a hollow zone therein, and connected between the columns in a hinged structure.

Sebastian F. Vaquero et al: "precast concrete, steel-braced, hybrid pipe rack structures", vol. 58, no.4, 1 September 2013, pages 55 to 67, describes precast concrete, steel-braced hybrid pipe rack structures.

JP HI 1 181796 A describes a temporary frame, which is installed to keep the position of a PC cable laid in a predetermined position in an excavated space to be backfilled with backfilling earth, is constructed of assembling material comprising biodegradable resin molded members, the temporary frame being left behind in the ground along with the PC cable by the backfilling of the excavated space. The temporary frame biodegrades and dissipates when left behind under the ground.

### SUMMARY OF THE INVENTION

Aspects of the present disclosure are defined by the appended Claims.

### BRIEF DESCRIPTION OF THE DRAWINGS

A full and enabling disclosure of the present subject matter, including the best mode thereof, directed to one of ordinary skill in the art, is set forth in the specification, which makes reference to the appended figures, in which:
FIG. 1 illustrates a perspective view of a first embodiment of the present invention;
FIG. 2 is a perspective view of a second embodiment of the present invention;
FIG. 3 illustrates a close up perspective view of a horizontal strut;
FIG. 4 is a top cutaway view of the joint between the leg and the horizontal
FIG. 5 is a side view of a first embodiment of the joint between the leg and the horizontal support;
FIG. 6 is top view of the insertion process for inserting the horizontal support into the two legs;
FIG. 7 is a side view of a second embodiment of the joint between the leg and the horizontal support;
FIG. 8 is a side view of a second embodiment of the joint between the leg and the foundation;
FIG. 9 is a front view of a second embodiment of the joint between the leg and the foundation;
FIGS. 10A-C are views of a second embodiment of the horizontal support;
FIGS. 11A-C are views of a third embodiment of the horizontal support;
FIGS. 12A and 12B are views of a second embodiment of the struts;
FIGS. 13A-C are views of a second embodiment of the vertical support;
FIG. 14 is a front view of a third embodiment of the joint between the leg and the foundation;
FIGS. 15A and 15B are cross sectional views of the third embodiment of the joint between the leg and the foundation;
FIG. 16 is a cross sectional view of the third embodiment of the joint between the leg and the foundation;
FIGS. 17A-C are views of a first embodiment of a method for making the joint between the leg and the foundation;
FIG. 18 is a view of a second embodiment of a method for making the joint between the leg and the foundation;
FIG. 19 is a perspective view of a fourth embodiment of the joint between the leg and the foundation;
FIG. 20 is a perspective view of a fourth embodiment of the joint between the leg and the foundation;
FIG. 21 is a perspective view of a fourth embodiment of the joint between the leg and the foundation;
FIG. 22 is a perspective view of an embodiment of a joint between the leg and an upper column;
FIG. 23 is a perspective view of the embodiment of the joint between the leg and the upper column;
FIGS. 24A and 24B are cross sectional views of the third embodiment of the joint between the leg and the upper column;
FIG. 25 is a cross sectional view of the third embodiment of the joint between the leg and the upper column;
FIGS. 26A-E are views of a third embodiment of a method for making the joint between the leg and the foundation;
FIG. 27 is a cutaway view of an embodiment of the joint between the leg and the foundation; and
FIG. 28 is a cutaway view of an embodiment of a joint between the leg and an upper column.

### DETAILED DESCRIPTION OF THE PREFERRED EMBODIMENTS

Reference is presently made in detail to exemplary embodiments of the present subject matter, one or more examples of which are illustrated in or represented by the drawings. Each example is provided by way of explanation of the present subject matter, not limitation of the present subject matter. In fact, it will be apparent to those skilled in the art that various modifications and variations can be made in the present subject matter without departing from the scope of the present subject matter. For instance, features illustrated or described as part of one embodiment can be used with another embodiment to yield a still further embodiment. Thus, it is intended that the present subject matter covers such modifications and variations as come within the scope of the disclosure and equivalents thereof.

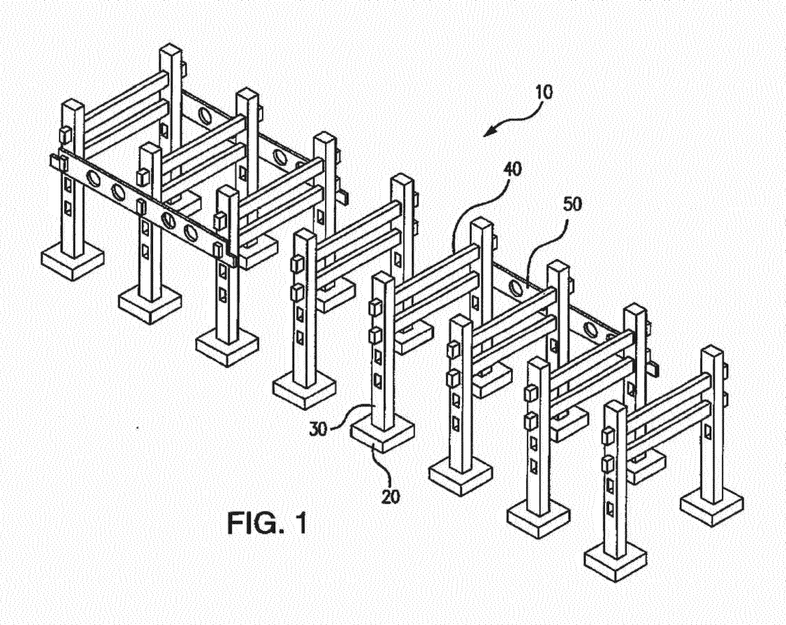

Figure 1 shows a perspective view of a first embodiment of an apparatus 10 for supporting pipes in accordance with the present invention. Apparatus 10 may also support other equipment such as power lines, or other objects. Further, as described herein, apparatus 10 is made of pre-stressed concrete so as to be impervious to fire. However, pipe racks as described herein made of other materials such as other fire impervious materials are also within the scope of the present invention.

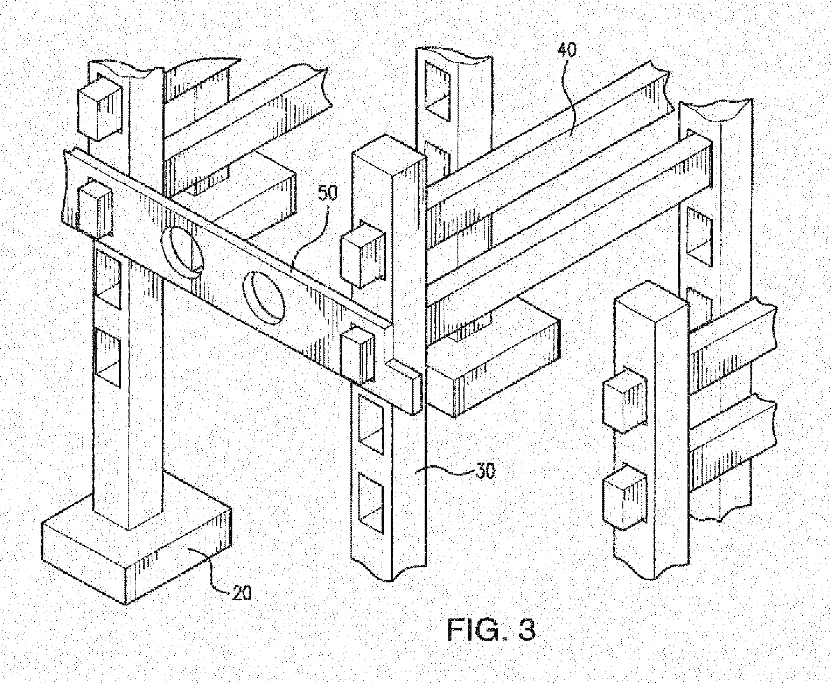

Apparatus 10 includes foundations 20, legs 30 located on foundations 20, horizontal supports 40, and horizontal struts 50 (shown in close up in Figure 3). In the embodiment shown in Figure 1, foundations 20 may be placed approximately 6.096 meters (20 feet) apart in the direction of the pipe, and approximately 7.62 meters (25 feet) apart in the direction perpendicular to the direction of the pipe. However, different or irregular distances are also within the scope of the invention.

Figure 1 also shows that legs 30 have four apertures 32 for receiving horizontal supports 40, two of which include horizontal supports 40. Any number of apertures 32 or horizontal supports 40 are within the scope of the invention. Further, any number or length of horizontal struts 50 are also within the scope of the invention.

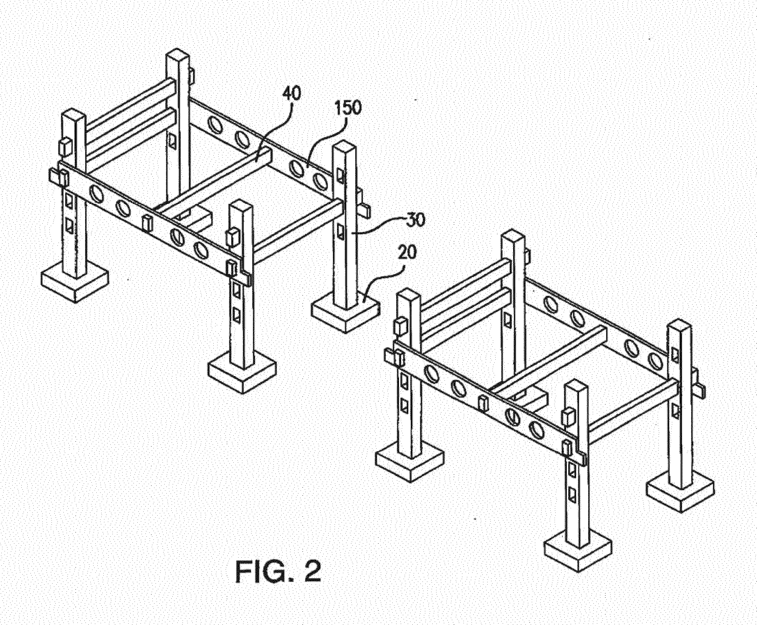

Figure 2 shows a second embodiment of the present invention, apparatus 110. Apparatus 110 includes foundations 20 placed at double the spacing shown in Figure 1. Apparatus 110 also includes legs 30, horizontal supports 40, and horizontal struts 150. However, horizontal support 40 may also be supported by horizontal struts 150 at locations equidistant between foundations 20. Thus, the same spacing of horizontal supports 30 is maintained, while the number of foundations 20 is halved. This can dramatically increase construction speed, as laying the foundations can be very labor intensive.

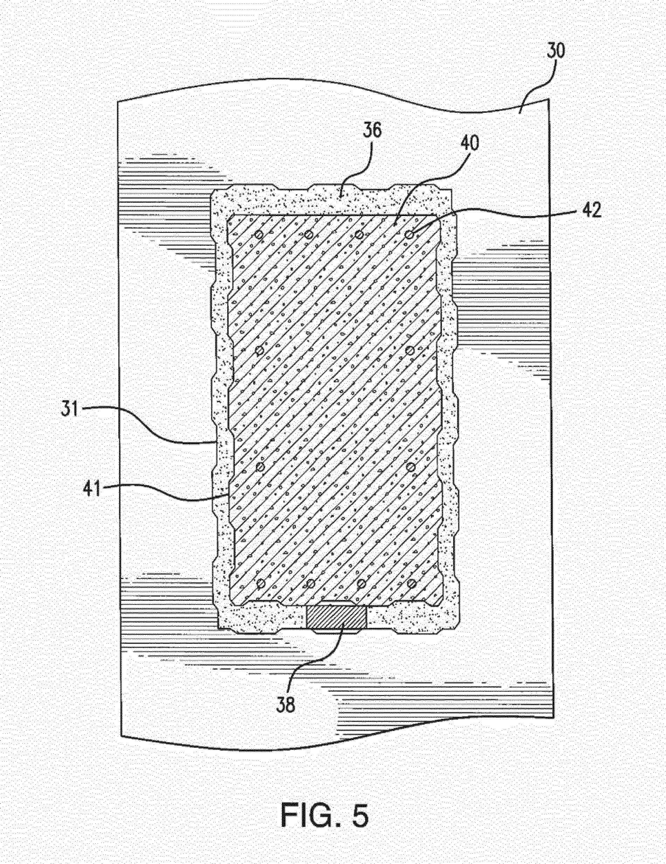

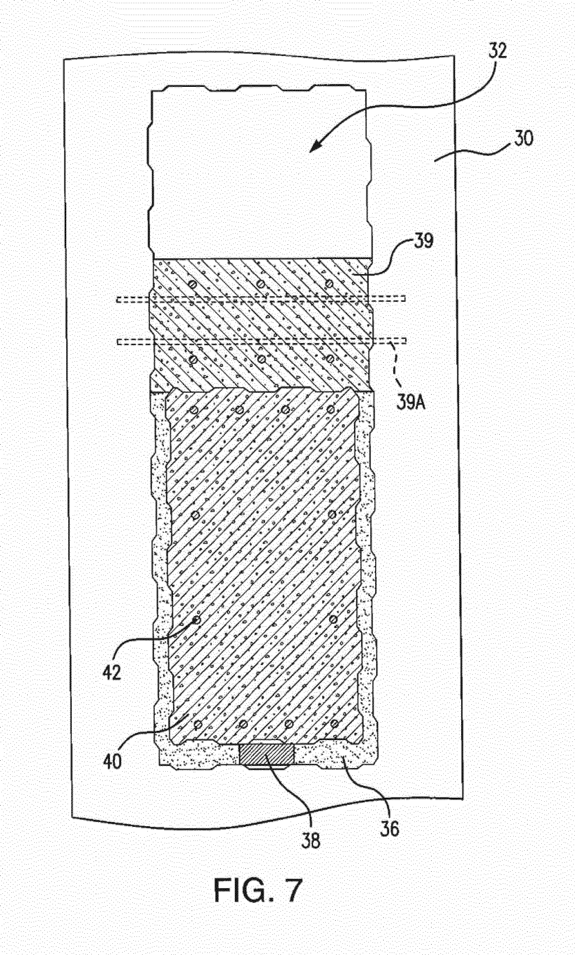

Horizontal supports 40 may be joined to horizontal struts 150 and legs 30 by either of the joining methods shown in Figures 5 and 7.

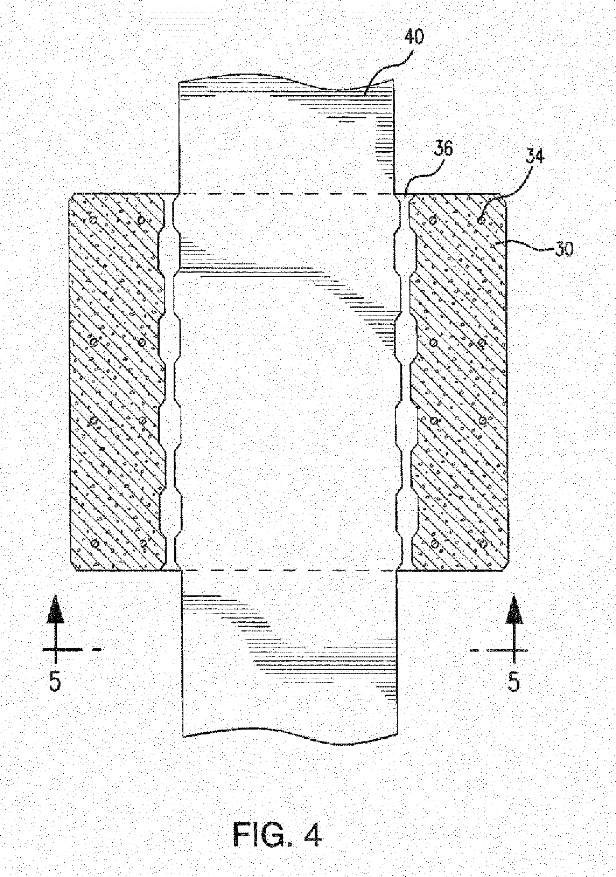

Figure 4 shows a cut away top view of the joint between leg 30 and horizontal support 40. Leg 30 may have pre-stress strands 34 extending in the vertical direction. Both the inside of aperture 32 and the outside of the portion of horizontal support 40 that is received in aperture 32 may include shear key surfaces 31 and 41 to strengthen the adhesive bond between leg 30 and horizontal support 40. The volume between leg 30 and horizontal support 40 is filled with an adhesive 36, which may be an ultra-high performance concrete or grout. In one embodiment, leg 30 is 0.9144 meters (36 inches) wide and 0.762 meters (30 inches) long (in the direction of the horizontal support 40).

Figure 5 shows a side view of a first embodiment of the joint between leg 30 and horizontal support 40. In this embodiment, horizontal support 40 is surrounded on all sides by adhesive 36. The only gap in adhesive 36 is due to steel shim 38. In one embodiment, horizontal support 40 is 0.4572 by 0.8128 meters (18 by 32 inches) and steel shim 38 is 0.1016 by 0.1016 meters (4 by 4 inches) in area and 0.0508 meters (2 inches) thick. Thus, the steel shim lifts the horizontal support 40 off of the bottom of aperture 32 before the adhesive 36 is added to the space between the leg 30 and the horizontal support 40. This allows for a roughly even thickness of adhesive 36 around the four sides of the horizontal support 40. Horizontal support 40 may also include pre-stress strands 42 extending in the horizontal direction.

Accordingly, aperture 32 is significantly bigger than horizontal support 40. For example, aperture 32 may be 0.5588 by 0.9144 meters (22 by 36 inches) and support 40 may be 0.4572 by 0.8128 meters (18 by 32 inches). Thus, roughly 0.0508 meters (2 inches) of space on each side can be found between the aperture 32 and horizontal support 40. This equates to lateral dimensions of support 40 being 81-89% as big as the corresponding lateral dimensions of aperture 32. Supports 40 having dimensions from 50%-90% of the corresponding dimension of aperture 32 are within the scope of the invention. Further, cross-sectional areas of the support 40 are from 40%-75% of the cross-sectional area of aperture 32.

This space allows for significant adjustment of the configuration of the support 40 when connecting the support 40 to legs 30. Therefore, the location of foundations 20 does not need to be exact, as errors can be corrected by adjusting the amount of space between the support 40 and the aperture 32. The two inch allowance on each side of the support 40 described above allows for correcting errors of up to approximately 0.04445 meters (1.75 inches) in the placement of foundations 20. In contrast, foundations for steel bents must be placed within a tolerance of 0.0127 meters (0.5 inches) or less. Moreover, the present inventors discovered that there is a 1:0.9 ratio of the distance allowance between the support 40 and the aperture 32 and the distance tolerance for the foundations 20.

In this regard, Figures 1 and 2 show foundations 20, legs 30, horizontal support, and apertures 32 that are rectangular prisms. However, any other shapes or cross-sectional shapes for the foundations 20, legs 30, horizontal supports 40, struts 50, and apertures 32 are within the scope of the invention.

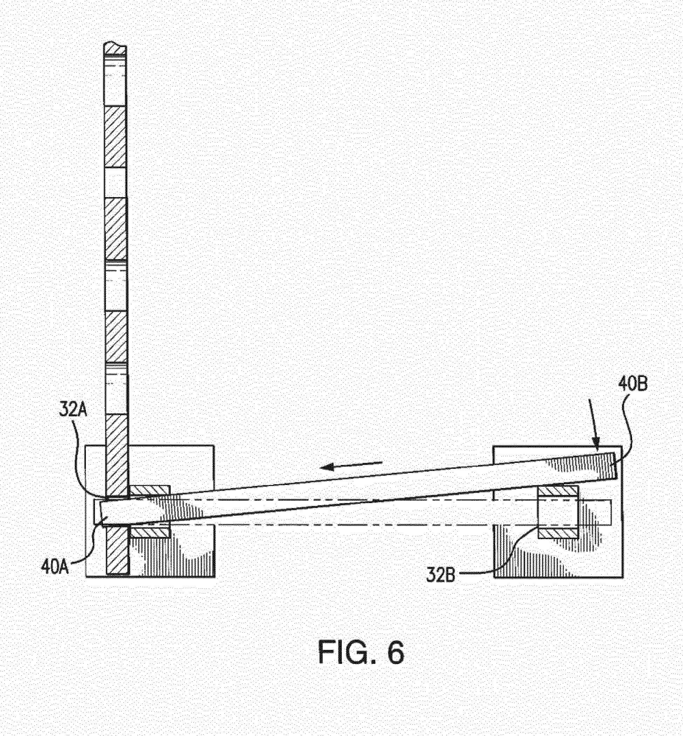

Figure 6 shows the process for constructing the present pipe racks. The foundations 20 are already placed and the legs 30 are inserted therein. The horizontal supports 40 are then inserted into the apertures 32 by inserting end 40A into aperture 32A, drawing the support 40 into the aperture 32A until the end 408 clears the opposite leg, and then moving the opposite end 408 into the aperture 328 of the opposite leg.

Figure 7 shows a second embodiment of the joint between leg 30 and horizontal support 40. In this embodiment, aperture 32 is much longer in the height direction than support 40. Horizontal support 40 is then surrounded on only three sides by adhesive 36. (A steel shim may be used as shown in Figure 5). Then an additional portion of concrete 39 is poured into the aperture 32 above the support 40. As shown in Figure 7, reinforcement 39A can be placed in aperture 32 before pouring the additional concrete. The concrete portion 39 thus locks support 40 into place, while leaving the upper part of aperture 32 open. This additional space allows for even greater adjustment of the support 40 in the vertical direction. The vertical adjustment may be critical when the foundations 20 are being placed on ground that may be uneven.

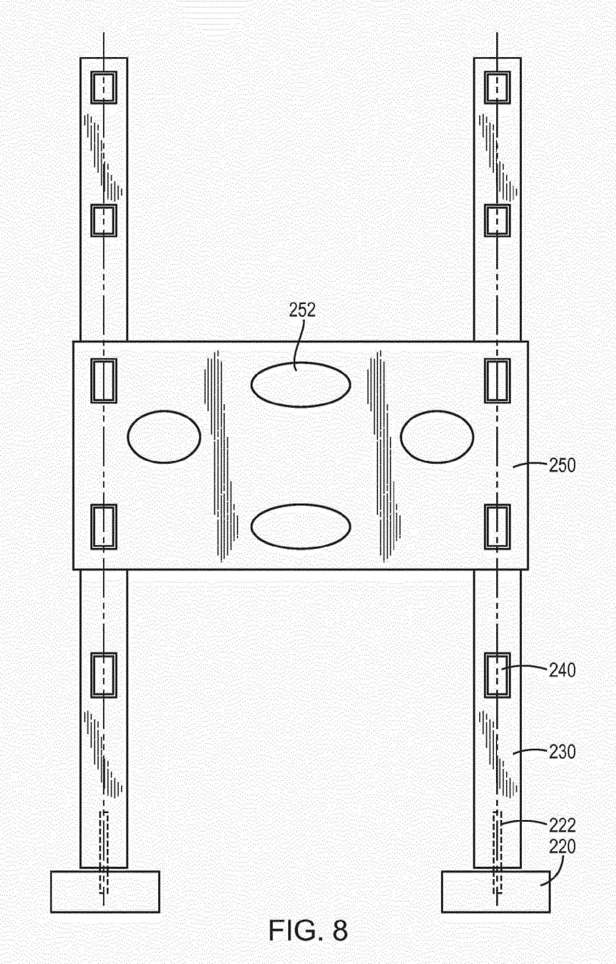

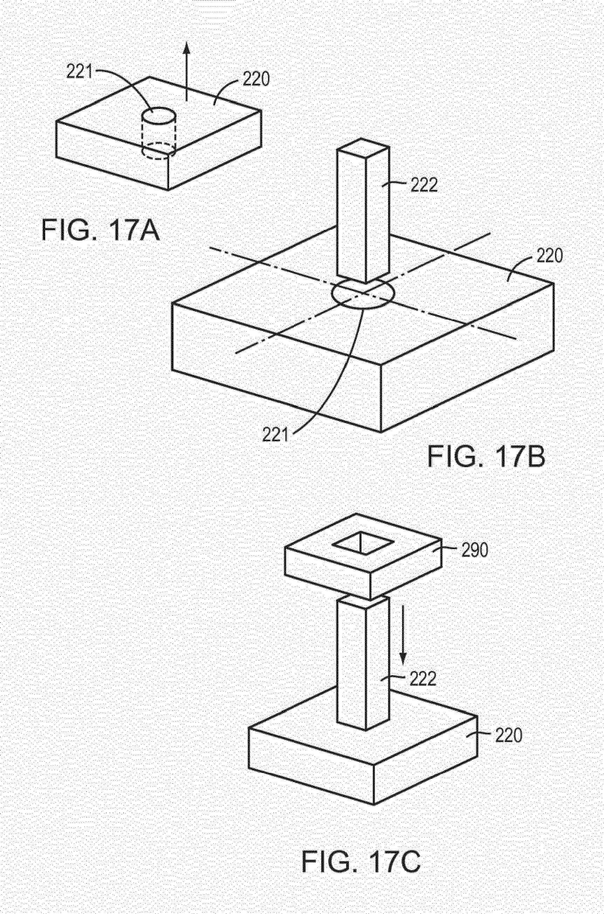

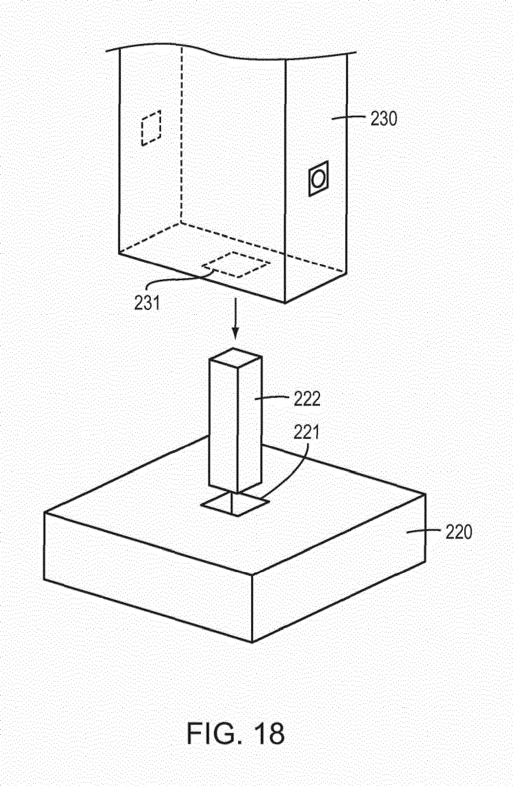

Figure 8 shows an alternative embodiment of the pipe racks of the present invention. In this embodiment, foundation 220 includes an aperture 221 in a top surface (shown in Figure 17A). Connection bolt 222 is located in that aperture and extends into an aperture 231 (shown in Figure 18) in a bottom surface of leg 230. Connection bolt 222 may be held in place with an adhesive such as grout. Figure 8 also shows the end view of horizontal supports 240, and also shows the extended strut 250. Strut 250 extends between four horizontal supports 240, two on each of adjacent legs 230. Strut 250 also includes apertures 252. Apertures 252 can be sized and located to allow pipes splitting off from the main pipes on the rack to pass through. Apertures 252 may also lower the weight of strut 250 without significantly reducing the structural integrity of the pipe racks.

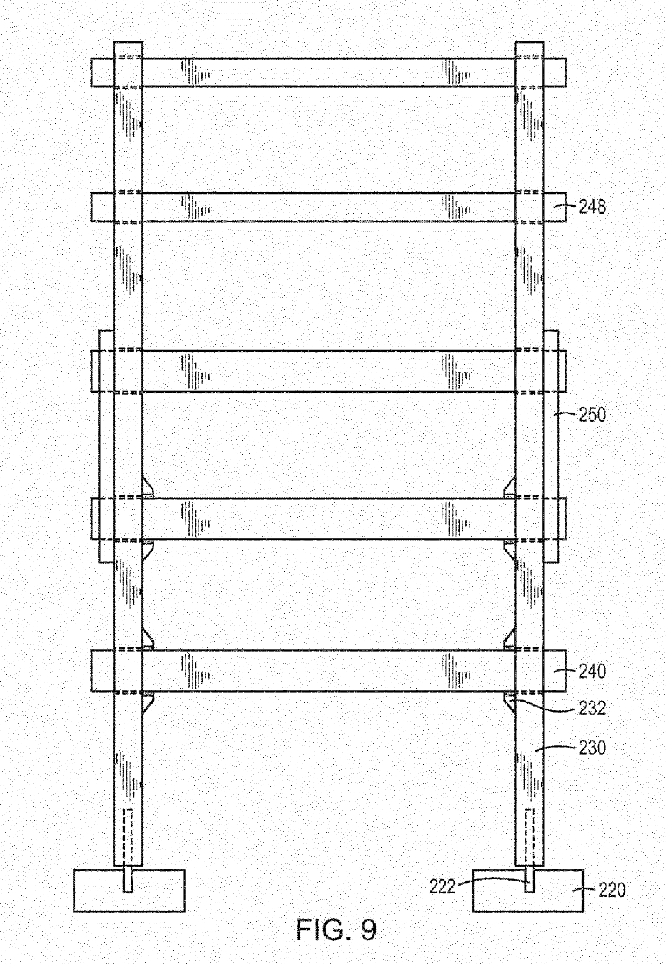

Figure 9 shows another view of the pipe racks shown in Figure 8. Legs 230 may also include additional supports 232 to carry additional load from the horizontal supports 240. As shown in Figure 9, the lower two of five horizontal supports receive additional support in this manner. However, any configuration of additional supports 232 is within the scope of the invention.

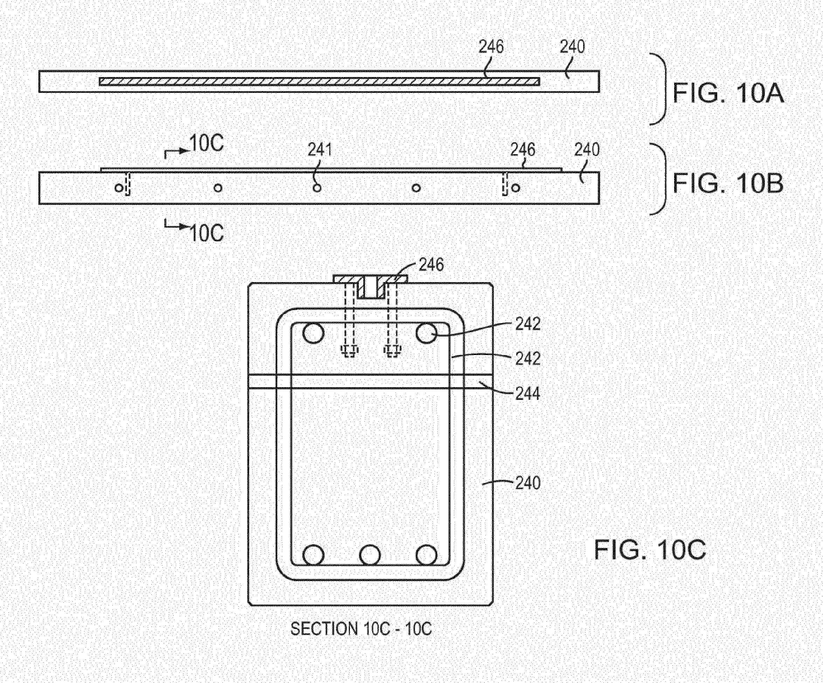

Figures 10A-10C show views of horizontal support 240. Horizontal support 240 includes a tube 241 that passes horizontally through the support. This allows the passage of, for example, wires through the support. The support also includes steel reinforcement rectangle 242 and steel rods 244 that may run the length of the support. Finally, a top surface of the support includes connector 246 which allows the pipes that run over the pipe rack to be secured to the horizontal support 240. For example, screws could be used to connect to connector 246 to secure brackets (not shown) over the pipes to the horizontal support 240.

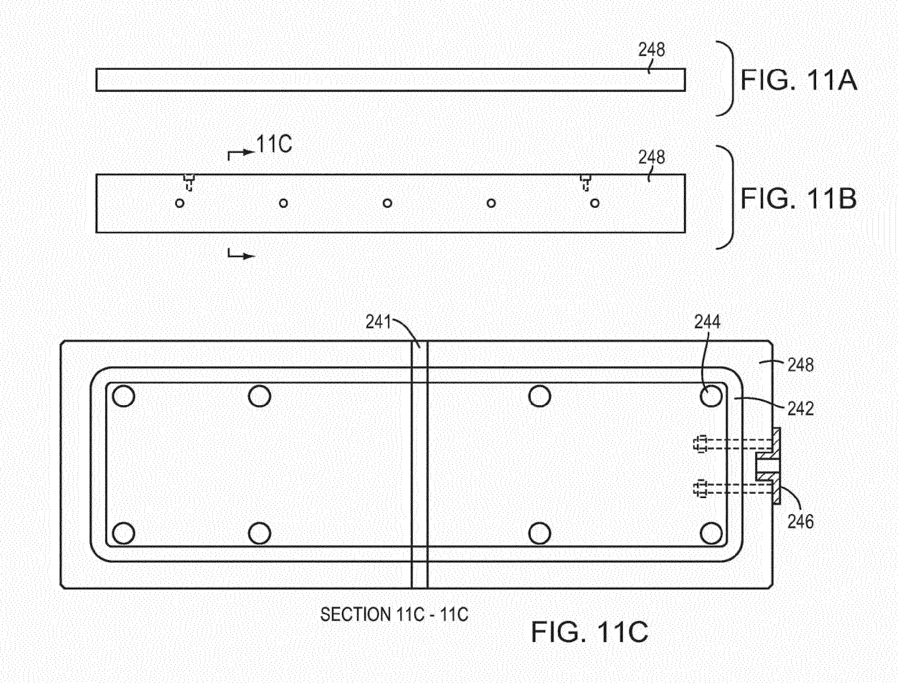

Figures 11A-11C show an alternative embodiment of horizontal support 240, which is labeled 248 in Figure 9. Alternative horizontal support 248 also includes a tube 241, but the tube is closer to a center of the support 248. Alternative horizontal support 248 includes steel reinforcement rectangle 242, steel rods 244, and connector 246 in a similar manner as support 240.

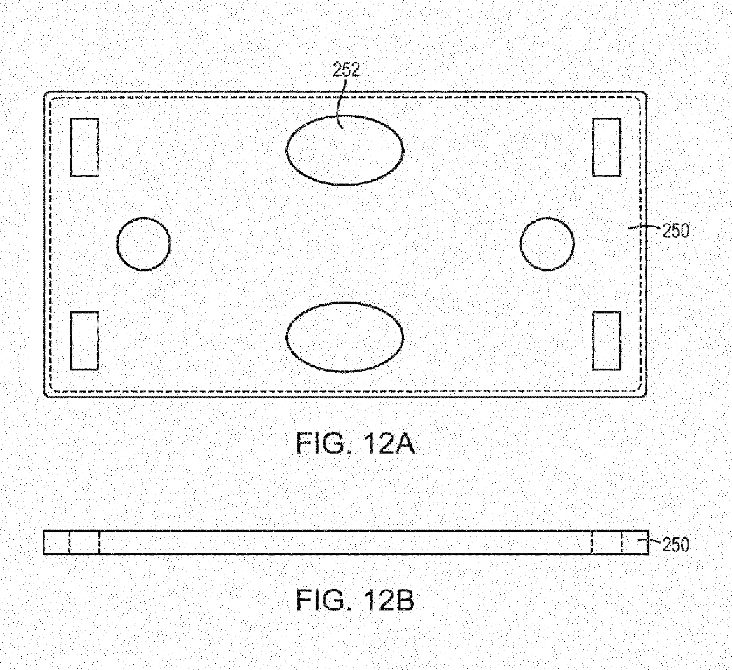

Figures 12A and 12B show views of strut 250. As noted previously, apertures 252 may be sized and located in any configuration within the scope of the invention.

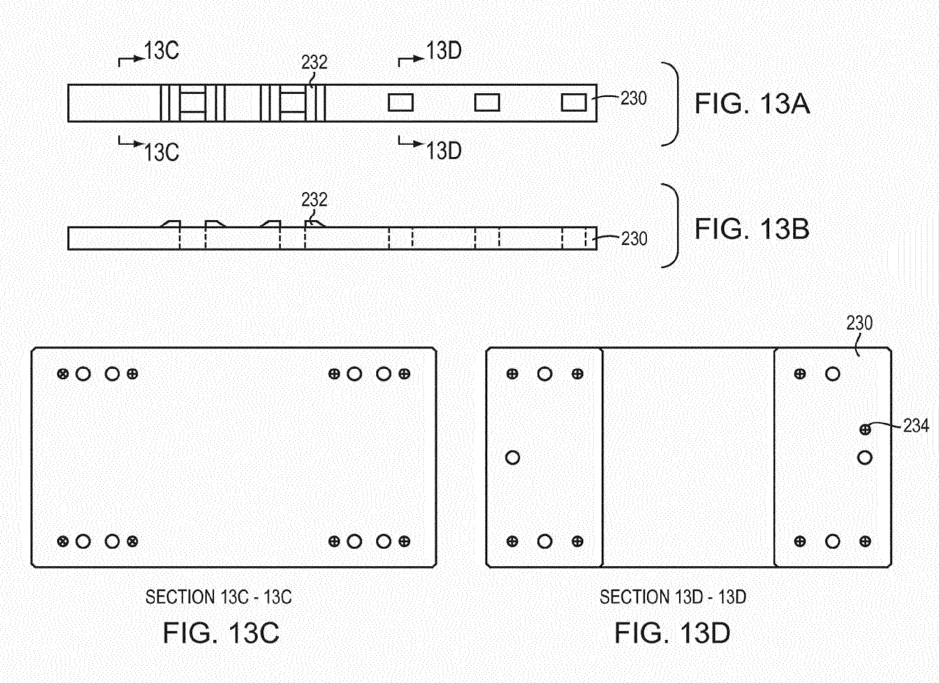

Figures 13A-13C shows views of leg 230. As shown in Figure 13C legs 230 include steel reinforcement rods 234.

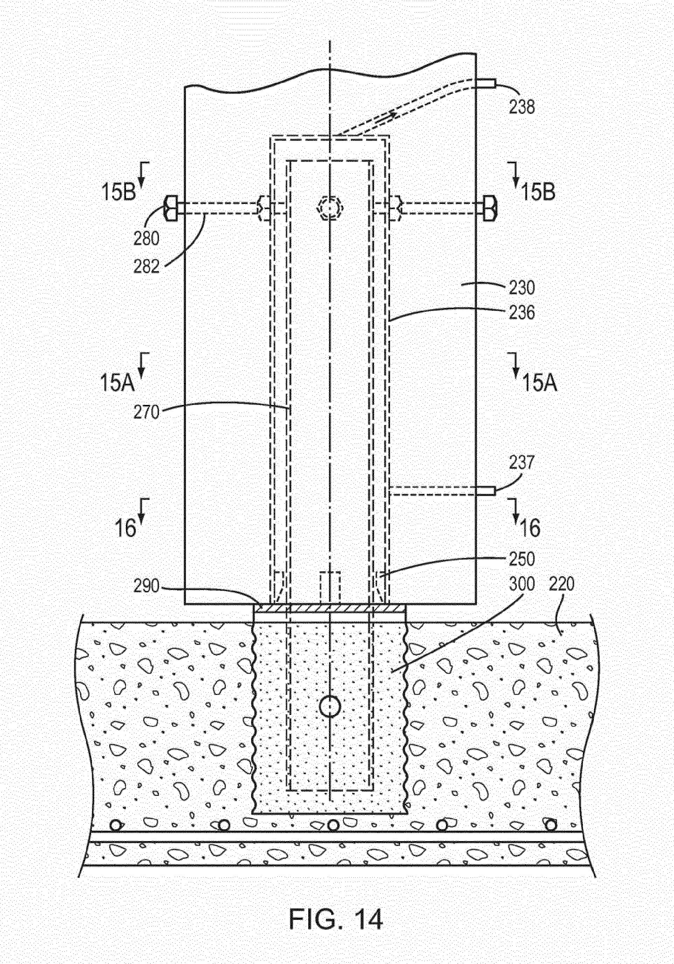

Figure 14 shows an alternative embodiment of the joint between the foundation and the leg. Foundation 220 includes an aperture 221 in a top surface that has connecting rod 270 located therein. The space around rod 270 is filled with grout 300. Grout bearing plate 290 is located over the grout 300. Rod 270 extends upward from foundation 220 into an aperture 231 in leg 230 that is bounded on the sides by rod 236. Rod 236 is cast within precast leg 230. The volume between rod 236 and rod 270 is also filled with grout. The grout enters the volume through grout inlet 237 and excess grout exits through grout exit 238. Leg 230 also includes passages 282 on each face of the leg. Bolts 280 pass through passages 282. Bolts 280 may be used to plumb the leg 230 by contacting rod 270 near the top of rod 270.

In one embodiment, rods 270 and 236 may be made of hollow structural steel. In one embodiment, rod 270 is 0.1778 meters by 0.1778 meters by 0.009525 thick and rod 236 is 0.2286 by 0.2286 by 0.0047625 meters thick. However, different dimensions are within the scope of the invention.

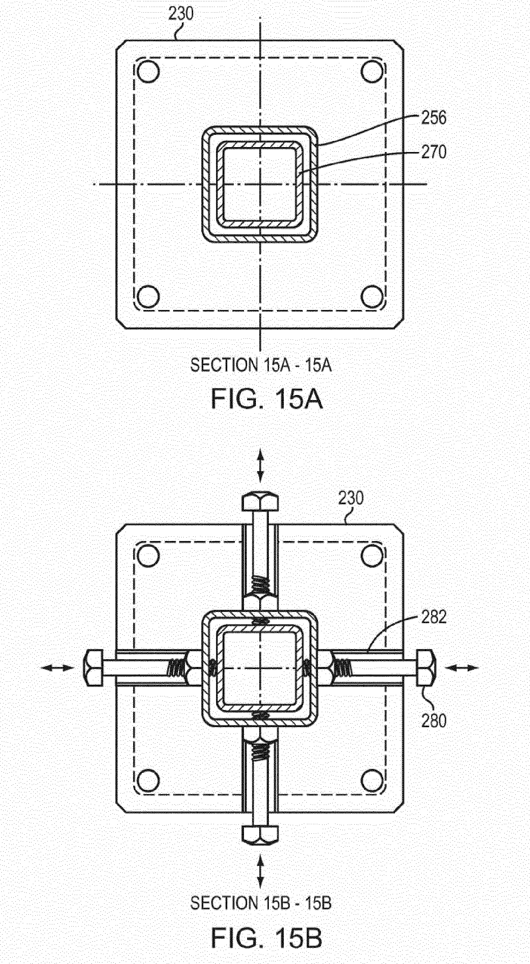

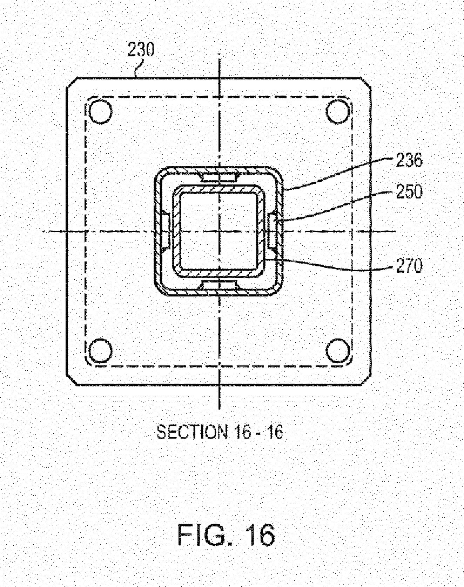

Figures 15A, 15B, and 16 are cross sectional views taken of the structure shown in Figure 14. Figure 16 also shows lugs 250 welded to rod 236 near the lower end of rod 236.

Figures 17A-17C show one embodiment of a method of constructing the joint between foundation 220 and leg 230. Step 1 is shown in Figure 17A where foundation 220 including circular aperture 221 is placed. Rectangular rod 222 is then inserted in aperture 221 and an adhesive such as grout is placed in aperture 221 after rod 222 is plumb, as shown in Figure 17B. Grout plate 290 is then placed over the grout joint in Figure 17C, and the foundation is ready to receive the leg 230.

Figure 18 shows another embodiment of a method to create the joint between the foundation and the leg. Foundation 220 including square aperture 221 receives rod 222, which is then placed in aperture 231 of leg 230.

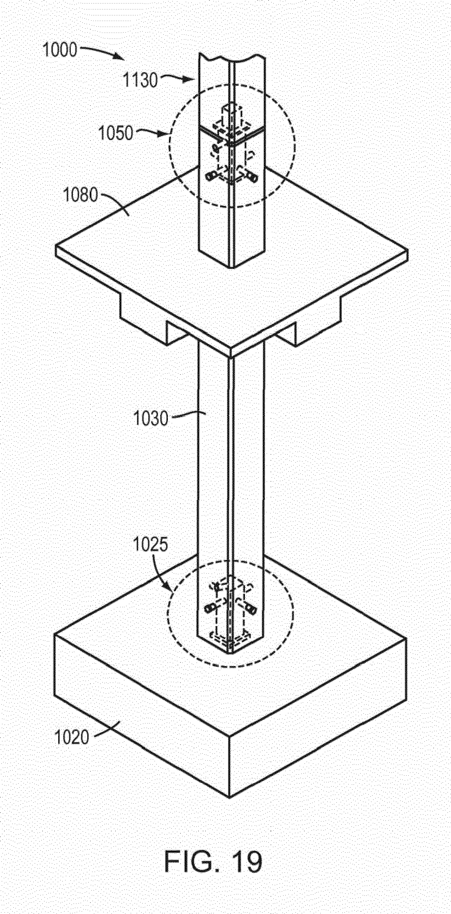

Figure 19 shows another embodiment of the present invention. Structure 1000 includes foundation 1020, leg 1030, deck 1080 and upper leg 1130. Foundation 1020 is connected to leg 103 by splice 1025. Leg 1030 is connected to upper leg 1130 by splice 1090.

Deck 1080 may be used to support pipes, planking for building a floor, or any other structure.

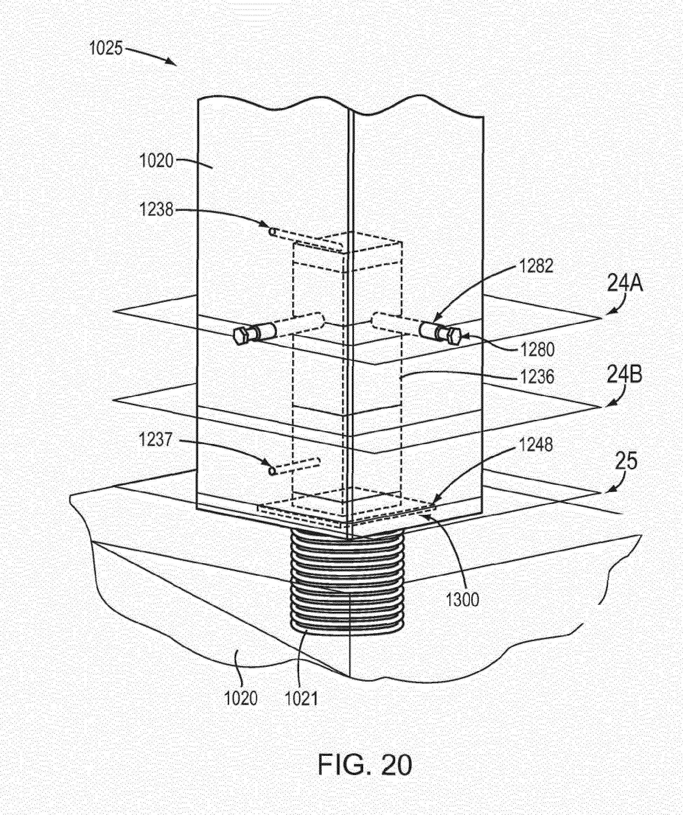

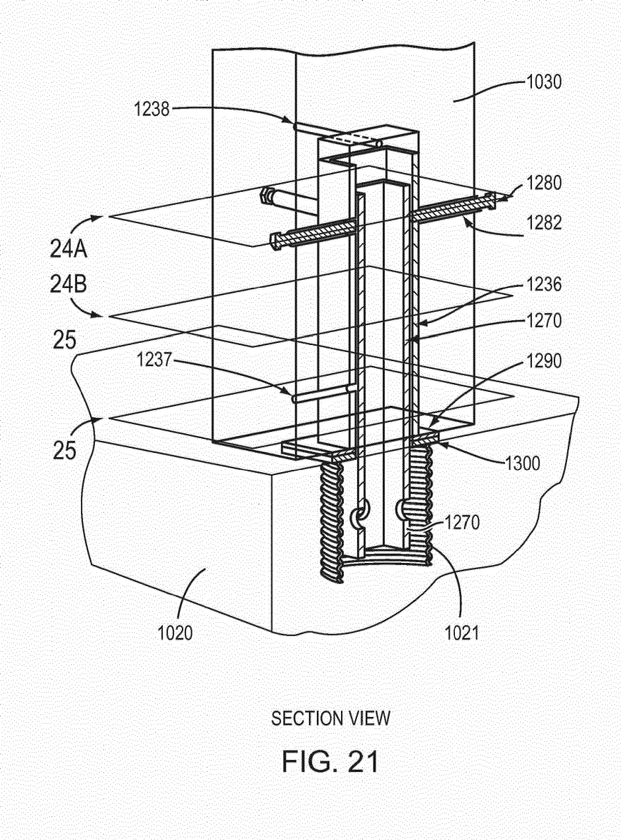

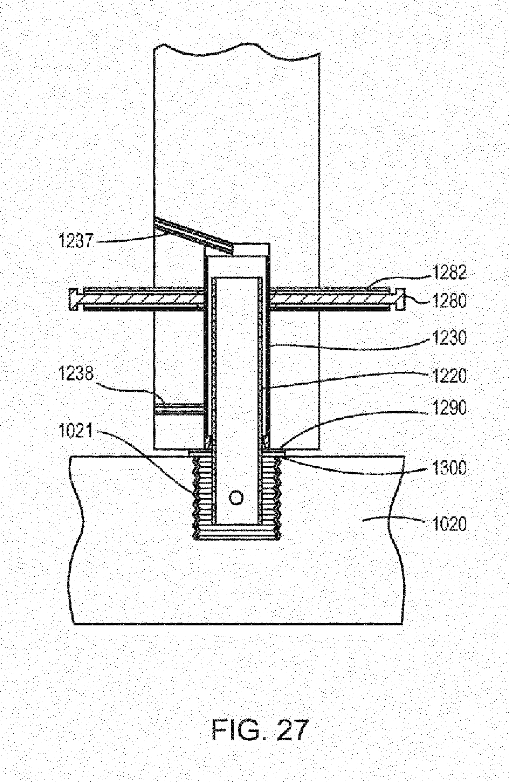

Figure 20 shows a close up of splice 1025. Foundation 1020 includes an aperture 1021, which in one embodiment may be made by a corrugated duct cast into the precast foundation 1020. Leg 1030 includes inner rod 1236 which is the outer bound of a volume filled with grout. The grout enters the volume through grout entry 1237 and excess grout exits through grout outlet 1238. Each face of leg 1030 includes a passage 1282 through which a bolt 1280 passes. These bolts are used to plumb the leg 1030 as noted hereinafter. Figure 21 shows a perspective cutaway view of this joint between the foundation and the leg and Figure 27 shows a side cutaway view.

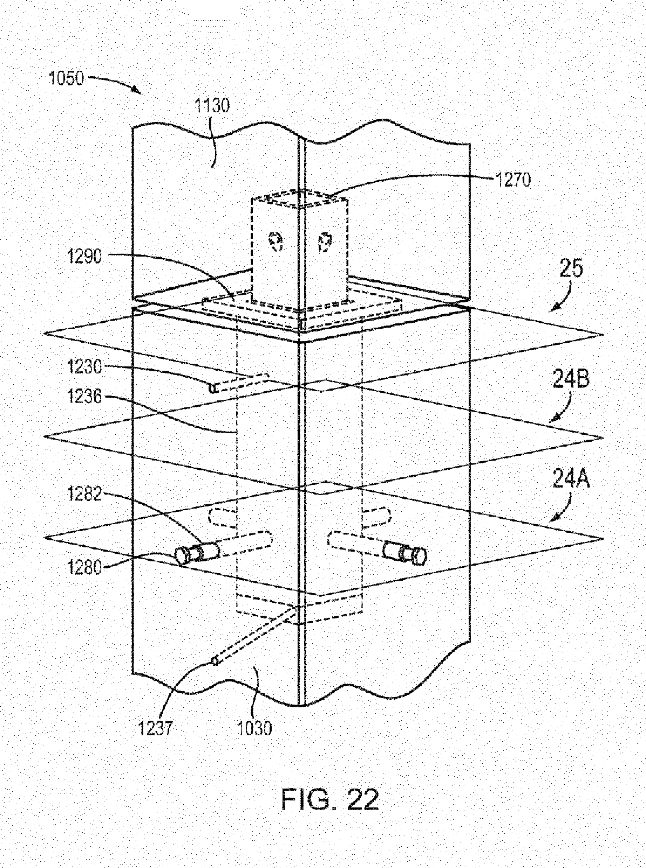

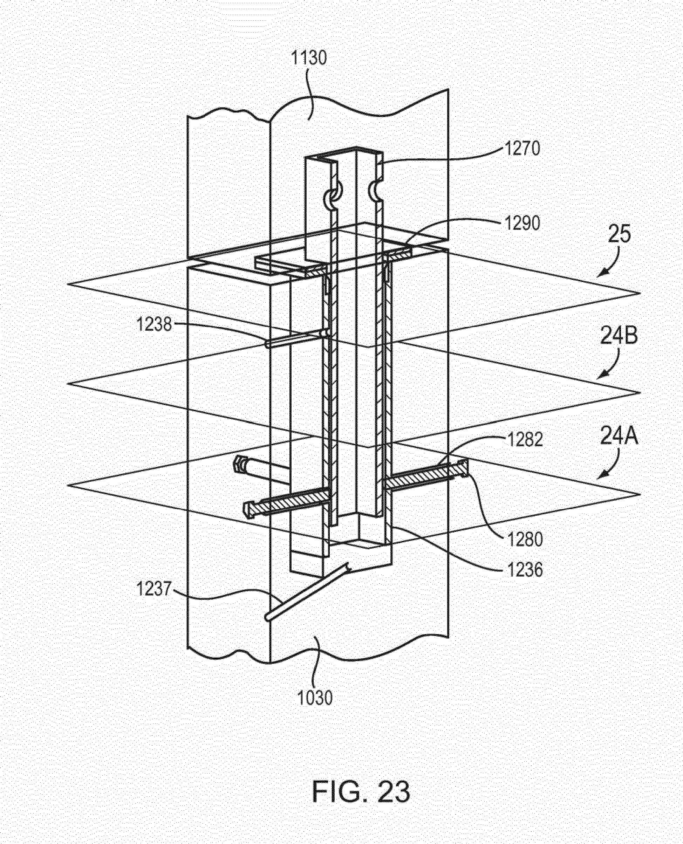

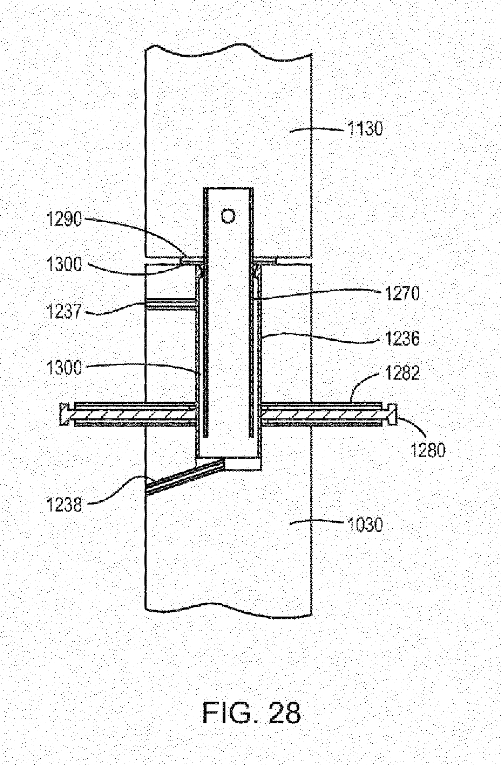

Figure 22 shows a perspective view of joint 1050 between leg 1030 and upper column 1130. This allows the structure to be built in several stages, allowing greater height for additional structures. Joint 1050 also includes a rod 1270 that is inserted in an aperture in the bottom of upper column 1130. The top of leg 1030 includes inner rod 1236 which is the outer bound of a volume filled with grout. Inner rod is precast within the upper portion of leg 1030. The grout enters the volume through grout entry 1237 and excess grout exits through grout outlet 1238. Each face of leg 1030 includes a passage 1282 through which a bolt 1280 passes. These bolts are used to plumb the leg 1030 and upper column 1120 as noted hereinafter. Figure 23 shows a perspective cutaway view of this joint between the leg and the upper column and Figure 28 shows a side cutaway view.

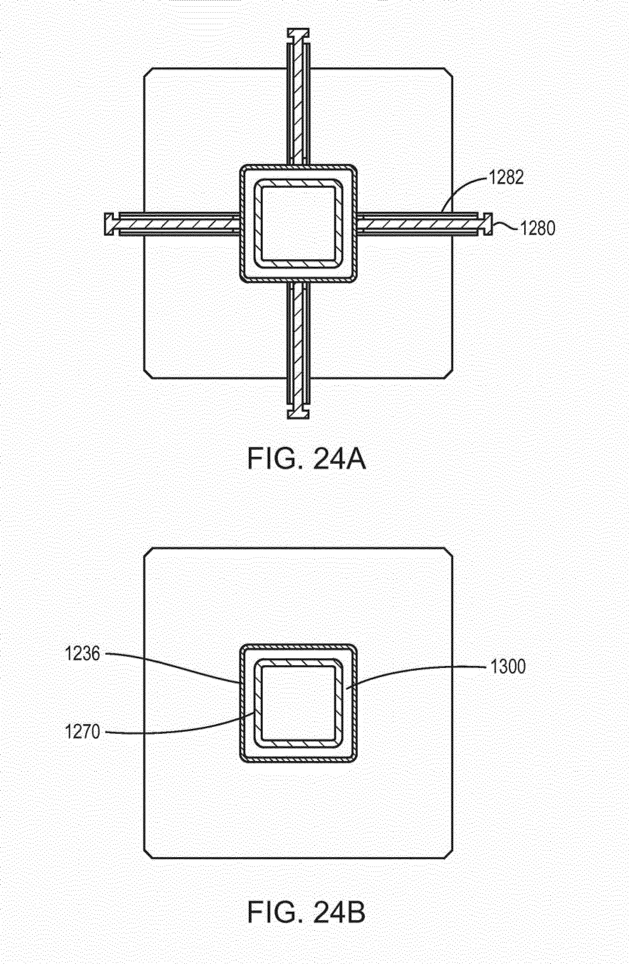

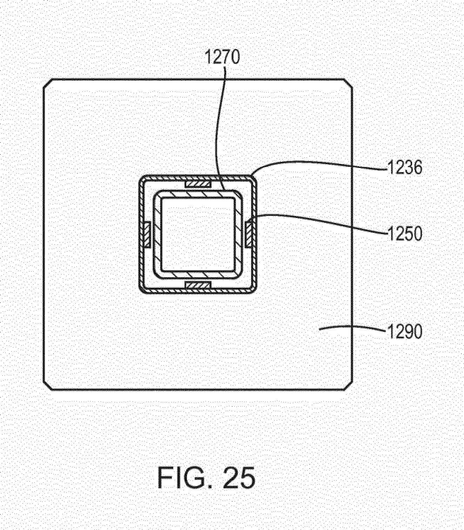

Figures 24A, 24B, and 25 are cross sectional views taken of the structure shown in Figures 20-23. Figure 25 also shows lugs 1250 welded to rod 1236 near the lower end of rod 1236.

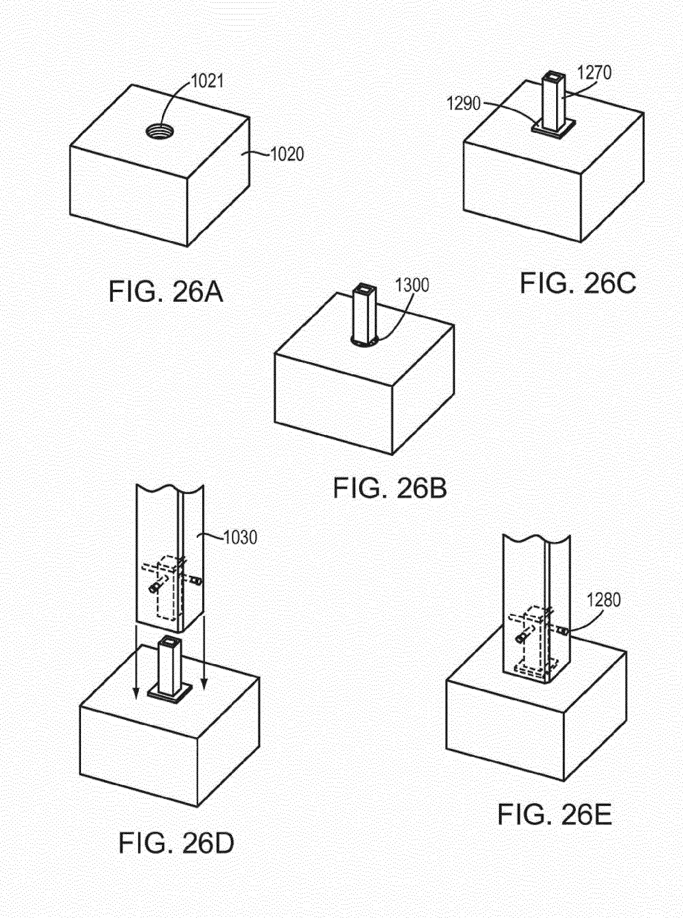

Figures 26A-E illustrate one method of making joint 1025 (joint 1050 is made in a similar manner). First, foundation 1020 is placed with aperture 1021 therein, as shown in Figure 26A. Rod 1270 is placed within aperture 1021 and grout 1300 is placed surrounding the rod 1270, as shown in Figure 26B. Figure 26C shows that bearing plate 1290 is placed over the grout to maintain the grout in the desired configuration. Figure 26D shows leg 1030 being placed over rod 1270. Figure 26E shows that bolts 1280 may then be tightened into passages 1282 to contact the rod 1270 to change the angle of the leg 1030 with respect to foundation 1020. This allows the leg 1030 to be quickly and easily plumbed with respect to foundation 1020. Finally, grout is pumped through grout entry 1237 to fill the empty volume within Leg 1030 to solidify the joint.

Accordingly, pipe racks that are impervious to fire may be constructed with less labor and more adjustability, reducing cost and improving performance. Therefore, a substantial cost savings may be gained by using the present method and apparatus for constructing pipe racks.

The present written description uses examples to disclose the present subject matter, including the best mode, and also to enable any person skilled in the art to practice the present subject matter, including making and using any devices or systems and performing any incorporated and/or associated methods. While the present subject matter has been described in detail with respect to specific embodiments thereof, it will be appreciated that those skilled in the art, upon attaining an understanding of the foregoing may readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be readily apparent to one of ordinary skill in the art.

## Claims

1. A pipe rack comprising:
at least one foundation (20);
two legs (30), one of the two legs being supported by the at least one foundation, each of the two legs including at least one aperture;
a horizontal support (40) having two ends, a first end located in an aperture (32) in a first leg of the two legs and a second end of the horizontal support being located in an aperture (32) in a second leg of the two legs, the first end of the horizontal support having a cross-sectional area that is less than a cross-sectional area of the aperture in the first leg and the second end of the horizontal support having a cross-sectional area that is less than a cross-sectional area of the aperture in the second leg;
an adhesive (36) within each aperture and in contact with the horizontal support, the two legs and the horizontal support are all being made of concrete;
at least a second foundation (20);
a second set of two legs (30), one of the second set of two legs being supported by the second foundation;
a horizontal strut (50) extending between a first leg of the two legs and a first leg of the second set of two legs.

2. The pipe rack according to claim 1, wherein the adhesive (36) is a grout.

3. The pipe rack according to claim 1, wherein the adhesive (36) is located around all sides of the horizontal support.

4. The pipe rack according to claim 1, wherein the horizontal support (40) has a rectangular side cross-section, and adhesive is located around only three sides of the horizontal support.

5. The pipe rack according to claim 4, wherein concrete is located along a fourth side of the horizontal support (40).

6. The pipe rack according to claim 1, further comprising:
a second horizontal strut (250) extending between a second leg of the two legs and a second leg of the second set of two legs; and
a second horizontal support (240) having two ends, a first end of the second horizontal support (240) being located in an aperture in the horizontal strut (250) and a second end of the second horizontal support being located in an aperture in the second horizontal strut (250).

7. The pipe rack according to claim 1, wherein the adhesive (36) is a concrete (39) layer within each aperture (1021, 221, 231, 328, 32A, 32).

8. The pipe rack according to claim 7, wherein the concrete (39) layer does not completely fill each aperture (1021, 221, 231, 328, 32A, 32).

9. The pipe rack according to claim 8, further comprising:
a reinforcement strand (270) within each aperture above the top side of the horizontal support, each end of the reinforcement strand penetrating opposite sides of the aperture and the reinforcement strand running through the concrete layer.

10. A method for constructing a pipe rack:
placing at least one foundation (20);
placing two legs (30), one of the two legs being supported by the at least one foundation, each of the two legs including at least one aperture (32);
inserting a first end (40A) of a horizontal support (40) into an aperture (32A) in a first leg of the two legs and a second end (40B) of the horizontal support into an aperture (32B) in a second leg of the two legs, the first end of the horizontal support having a cross-sectional area that less than a cross-sectional area of the aperture in the first leg and the second end of the horizontal support having a cross-sectional area that is less than a cross-sectional area of the aperture in the second leg;
inserting an adhesive into each aperture, the two legs and the horizontal support are all being made of concrete;
placing at least a second foundation (20);
placing a second set of two legs (30), one of the second set of two legs being supported by the second foundation;
providing a horizontal strut (50) extending between a first leg of the two legs and a first leg of the second set of two legs.

11. The method according to claim 10, wherein the adhesive is a grout.

12. The method according to claim 10, further comprising:
pouring concrete into each aperture over a top side of the horizontal support.

13. The method according to claim 12, wherein the pouring concrete does not completely fill each aperture with concrete.

14. The method according to claim 12, further comprising:
inserting reinforcement strands into each aperture above the top side of the horizontal support before the pouring concrete.

15. The method according to claim 13, further comprising:
placing a second horizontal strut (250) extending between a second leg of the two legs and a second leg of the second set of two; and
inserting a second horizontal support (240) having two ends into apertures in the horizontal strut and the second horizontal strut such that a first end of the second horizontal support is located in an aperture in the horizontal strut and a second end of the second horizontal support is located in an aperture in the second horizontal strut (250).

## Patentansprüche

1. Rohrgestell, Folgendes umfassend:
mindestens eine Basis (20);
zwei Beine (30), wobei eines der zwei Beine von der mindestens einen Basis getragen wird, wobei jedes der zwei Beine mindestens eine Öffnung umfasst;
einen horizontalen Träger (150), der zwei Enden Aufweist, wobei sich ein erstes Ende in einer Öffnung (32) in einem ersten Bein der zwei Beine befindet und sich ein zweites Ende des horizontalen Trägers in einer Öffnung (32) in einem zweiten Bein der zwei Beine befindet, wobei das erste Ende des horizontalen Trägers eine Querschnittsfläche aufweist, die kleiner als die Querschnittsfläche der Öffnung im ersten Bein ist und das zweite Ende des horizontalen Trägers eine Querschnittsfläche aufweist, die kleiner als die Querschnittsfläche der Öffnung im zweiten Bein ist;
einen Klebstoff (36) innerhalb jeder Öffnung und in Kontakt mit dem horizontalen Träger, wobei die zwei Beine und der horizontale Träger aus Beton bestehen;
mindestens eine zweite Basis (20);
einen zweiten Satz Beine (30), wobei eines des zweiten Satzes Beine von der zweiten Basis getragen wird;
eine horizontale Strebe (50), die sich zwischen einem ersten Bein der zwei Beine und einem ersten Bein des zweiten Satzes der zwei Beine erstreckt.

2. Rohrgestell nach Anspruch 1, wobei der Klebstoff ein Mörtel ist.

3. Rohrgestell nach Anspruch 1, wobei sich der Klebstoff um die Seiten des horizontalen Trägers herum befindet.

4. Rohrgestell nach Anspruch 1, wobei der horizontale Träger einen rechteckigen Seitenquerschnitt aufweist und sich Klebstoff nur um drei Seiten des horizontalen Trägers herum befindet.

5. Rohrgestell nach Anspruch 4, wobei sich entlang einer vierten Seite des horizontalen Trägers Beton befindet.

6. Rohrgestell nach Anspruch 1, ferner Folgendes umfassend:
eine zweite horizontale Strebe, die sich zwischen einem zweiten Bein der zwei Beine und einem zweiten Bein des zweiten Satzes der zwei Beine erstreckt; und
einen zweiten horizontalen Träger, der zwei Enden aufweist, wobei sich das erste Ende des zweiten horizontalen Trägers in einer Öffnung in der horizontalen Strebe befindet und sich ein zweites Ende des zweiten horizontalen Trägers in einer Öffnung in der zweiten horizontalen Strebe befindet.

7. Rohrgestell nach Anspruch 1, wobei der Klebstoff eine Betonschicht innerhalb jeder Öffnung ist.

8. Rohrgestell nach Anspruch 7, wobei die Betonschicht die Öffnungen nicht vollständig ausfüllt.

9. Rohrgestell nach Anspruch 8, ferner Folgendes umfassend:
einen Verstärkungsstrang innerhalb jeder Öffnung über der Oberseite des horizontalen Trägers, wobei jedes Ende des Verstärkungsstrangs entgegengesetzte Seiten der Öffnung durchdringt und der Verstärkungsstrang durch die Betonschicht verläuft.

10. Verfahren zur Herstellung eines Rohrgestells:
Anordnen mindestens einer Basis (20);
Anordnen von zwei Beinen (30), wobei eines der zwei Beine von der mindestens einen Basis getragen wird, wobei jedes der zwei Beine mindestens eine Öffnung (32) umfasst;
Einsetzen eines ersten Endes (40A) eines horizontalen Trägers (40) in eine Öffnung (32A) in einem ersten Bein der zwei Beine und eines zweiten Endes (40B) des horizontalen Trägers in eine Öffnung (32B) in einem zweiten Bein der zwei Beine, wobei das erste Ende des horizontalen Trägers eine Querschnittsfläche aufweist, die kleiner als die Querschnittsfläche der Öffnung im ersten Bein ist und das zweite Ende des horizontalen Trägers eine Querschnittsfläche aufweist, die kleiner als die Querschnittsfläche der Öffnung im zweiten Bein ist;
Einfügen eines Klebstoffs in jede Öffnung, wobei die zwei Beine und der horizontale Träger aus Beton bestehen;
Anordnen mindestens einer zweiten Basis (20);
Anordnen eines zweiten Satzes von zwei Beinen (30), wobei eines des zweiten Satzes Beine von der zweiten Basis getragen wird;
Vorsehen einer horizontalen Strebe (40), die sich zwischen einem ersten Bein der zwei Beine und einem ersten Bein des zweiten Satzes der zwei Beine erstreckt.

11. Verfahren nach Anspruch 10, wobei der Klebstoff ein Mörtel ist.

12. Verfahren nach Anspruch 10, ferner Folgendes umfassend:
Gießen von Beton in jede Öffnung über einer Oberseite des horizontalen Trägers.

13. Verfahren nach Anspruch 12, wobei das Gießen von Beton die Öffnungen nicht vollständig mit Beton ausfüllt.

14. Verfahren nach Anspruch 12, ferner Folgendes umfassend:
Einsetzen von Verstärkungssträngen in jede Öffnung über der Oberseite des horizontalen Trägers, bevor der Beton gegossen wird.

15. Verfahren nach Anspruch 13, ferner Folgendes umfassend:
Anordnen einer zweiten horizontalen Strebe, die sich zwischen einem zweiten Bein der zwei Beine und einem zweiten Bein des zweiten Satzes der zwei Beine erstreckt; und
Einsetzen eines zweiten horizontalen Trägers, der zwei Enden aufweist, in die Öffnungen in der horizontalen Strebe und der zweiten horizontalen Strebe, sodass sich ein erstes Ende des zweiten horizontalen Trägers in einer Öffnung in der horizontalen Strebe befindet und sich ein zweites Ende des zweiten horizontalen Trägers in einer Öffnung in der zweiten horizontalen Strebe befindet.

## Revendications

1. Bâti de tuyau, comprenant :
au moins une fondation (20) ;
deux pieds (30), l'un des deux pieds étant supporté par l'au moins une fondation, chacun des deux pieds comportant au moins une ouverture ;
un support horizontal (150) ayant deux extrémités, une première extrémité étant située dans une ouverture (32) dans un premier des deux pieds et une deuxième extrémité du support horizontal étant située dans une ouverture (32) dans un deuxième des deux pieds, la première extrémité du support horizontal ayant une surface en section transversale inférieure à une surface en section transversale de l'ouverture dans le premier pied et la deuxième extrémité du support horizontal ayant une surface en section transversale inférieure à une surface en section transversale de l'ouverture dans le deuxième pied ;
un adhésif (36) à l'intérieur de chaque ouverture et en contact avec le support horizontal, les deux pieds et le support horizontal étant tous fabriqués en béton ;
au moins une deuxième fondation (20) ;
un deuxième jeu de deux pieds (30), l'un parmi le deuxième jeu de deux pieds étant supporté par la deuxième fondation ;
une entretoise horizontale (50) s'étendant entre un premier des deux pieds et un premier pied du deuxième jeu de deux pieds.

2. Bâti de tuyau selon la revendication 1, dans lequel l'adhésif est un coulis.

3. Bâti de tuyau selon la revendication 1, dans lequel l'adhésif est situé autour de tous les côtés du support horizontal.

4. Bâti de tuyau selon la revendication 1, dans lequel le support horizontal présente une section transversale latérale rectangulaire et de l'adhésif est situé autour de seulement trois côtés du support horizontal.

5. Bâti de tuyau selon la revendication 4, dans lequel du béton est situé le long d'un quatrième côté du support horizontal.

6. Bâti de la revendication 1, comprenant en outre :
une deuxième entretoise horizontale s'étendant entre un deuxième pied des deux pieds et un deuxième pied du deuxième jeu de deux pieds ; et
un deuxième support horizontal ayant deux extrémités, une première extrémité du deuxième support horizontal étant située dans une ouverture dans l'entretoise horizontale et une deuxième extrémité du deuxième support horizontal étant située dans une ouverture dans la deuxième entretoise horizontale.

7. Bâti de tuyau selon la revendication 1, dans lequel l'adhésif est une couche de béton à l'intérieur de chaque ouverture.

8. Bâti de tuyau selon la revendication 7, dans lequel la couche de béton ne remplit pas complètement chaque ouverture.

9. Bâti de tuyau selon la revendication 8, comprenant en outre :
une barre de renforcement à l'intérieur de chaque ouverture au-dessus du côté supérieur du support horizontal, chaque extrémité de la barre de renforcement pénétrant à travers des côtés opposés de l'ouverture et la barre de renforcement s'étendant à travers la couche de béton.

10. Procédé de construction d'un bâti de tuyau, comprenant les étapes suivantes :
placer au moins une fondation (20) ;
placer deux pieds (30), l'un des deux pieds étant supporté par l'au moins une fondation, chacun des deux pieds comportant au moins une ouverture (32) ;
insérer une première extrémité (40A) d'un support horizontal (40) dans une ouverture (32A) dans un premier des deux pieds et une deuxième extrémité (40B) du support horizontal dans une ouverture (32B) dans un deuxième des deux pieds, la première extrémité du support horizontal ayant une surface en section transversale inférieure à une surface en section transversale de l'ouverture dans le premier pied et la deuxième extrémité du support horizontal ayant une surface en section transversale inférieure à une surface en section transversale de l'ouverture dans le deuxième pied ;
insérer un adhésif dans chaque ouverture, les deux pieds et le support horizontal étant tous fabriqués en béton ;
placer au moins une deuxième fondation (20) ;
placer un deuxième jeu de deux pieds (30), l'un du deuxième jeu de deux pieds étant supporté par la deuxième fondation ;
fournir une entretoise horizontale (40) s'étendant entre un premier des deux pieds et un premier pied du deuxième jeu de deux pieds.

11. Procédé selon la revendication 10, dans lequel l'adhésif est un coulis.

12. Procédé selon la revendication 10, comprenant :
le fait de verser du béton dans chaque ouverture sur un côté supérieur du support horizontal.

13. Procédé selon la revendication 12, dans lequel le béton versé ne remplit pas complètement chaque ouverture.

14. Procédé selon la revendication 12, comprenant en outre l'étape suivante :
insérer des barres de renforcement dans chaque ouverture au-dessus du côté supérieur du support horizontal avant de verser le béton.

15. Procédé selon la revendication 13, comprenant en outre les étapes suivantes :
placer une deuxième entretoise horizontale s'étendant entre un deuxième des deux pieds et un deuxième pied du deuxième jeu de deux pieds ; et
insérer un deuxième support horizontal ayant deux extrémités dans des ouvertures dans l'entretoise horizontale et la deuxième entretoise horizontale de telle sorte qu'une première extrémité du deuxième support horizontal soit située dans une ouverture dans l'entretoise horizontale et qu'une deuxième extrémité du deuxième support horizontal soit située dans une ouverture dans la deuxième entretoise horizontale.
